# DEMANDE DE BREVET EUROPEEN

(11) **EP 1 184 786 A1**
(43) Date de publication de la demande: **06.03.2002**
(21) Numéro de dépôt: 01402274.3
(22) Date de dépôt: 31.08.2001
(51) Int. Cl.: G06F 9/46, G06F 9/50, G06F 9/54

(54) **Système informatique multiprocess**

(30) Priorité: 01.09.2000 FR 0011197
(71) Demandeur: Airsys ATM S.A., 92220 Bagneux (FR)
(72) Inventeur: Vertes, Marc, Thales, Intellectual Property, 94117 Arcueil Cedex (FR)
(74) Mandataire: Desperrier, Jean-Louis

(57) **Abrégé**

La présente invention concerne un système informatique multiprocess.

Le système au moins deux process (P1, P2, ...Pi, ...PN) reliés par un réseau (40). Chaque process étant exécuté par un matériel équipé d'un système d'exploitation un process comporte au moins :
- une couche logicielle librairie permettant à ce système d'exploitation d'accéder aux programmes d'activation des protocoles de communications associés aux entrées sorties ;
- une couche intermédiaire comportant un service de communication entre process associée à un canal de communication ;
- un multiplexeur (X_{co}, 41, 42, 43, 44) encapsulé dans la librairie (libc) multiplexant le canal de communication d'un process Pi avec les canaux de communication des autres process P1, P2, ... PN, le canal de communication entre deux process Pi, Pk, est activé par les multiplexeurs des deux process, sur requête de l'un. ;

L'invention permet notamment une communication étendue entre divers traitements informatiques au travers d'entrées/sorties standards. Plus particulièrement, elle permet d'implémenter de manière transparente aux applications des services complexes tels que par exemple le mode client serveur, le traitement distribué et concurrent, le contrôle des flots de données, la tolérance aux pannes, la supervision, la reconfiguration et l'extension dynamique ainsi que la modélisation de l'architecture système.

## Description

La présente invention concerne un système informatique multiprocess. Elle permet notamment une communication étendue entre divers traitements informatiques au travers d'entrées/sorties standards. Plus particulièrement, elle permet d'implémenter de manière transparente aux applications des services complexes tels que par exemple le mode client serveur, le traitement distribué et concurrent, le contrôle des flots de données, la tolérance aux pannes, la supervision, la reconfiguration et l'extension dynamique ainsi que la modélisation de l'architecture système.

Les canaux de communications des machines Unix, encore appelés « pipes » Unix dans la littérature anglo-saxonne, sont notamment un service de communication inter process, assurant le transfert de données unidirectionnelles et sécurisées entre deux traitements. Un avantage majeur de ce mode de transfert réside dans la possibilité de faire coopérer deux traitements totalement indépendants l'un de l'autre, par le simple changement de direction des entrées/sorties de chacun des traitements, la sortie de l'un étant re-dirigée sur l'entrée de l'autre. Ce mécanisme est largement utilisé dans les systèmes Unix. Il permet de concevoir des programmes simples, spécialisés dans une tâche précise et de les assembler par la suite pour obtenir des systèmes plus complexes de traitements coopérant, appelés par la suite coprocess.

Ce type de mécanisme présente cependant un inconvénient. En effet, les pipes comportent des limitations. En particulier, ils ne permettent de connecter que deux traitements à la fois, par une connexion point à point, les deux traitements devant se trouver sur la même machine, et dans le cas de communication bidirectionnelle (coprocess), l'un des traitements doit être le père de l'autre.

Un but de l'invention est notamment de pallier cet inconvénient en supprimant les limitations précitées, c'est-à-dire de permettre à un traitement utilisant des entrées/sorties standards de communiquer avec plusieurs traitements simultanément, ces traitements pouvant être répartis sur des machines distinctes, et pouvant être créés indépendamment les uns des autres. A cet effet, l'invention a pour objet un système informatique comportant au moins deux process P1, P2, ...Pi, ...PN reliés par un réseau. Chaque process est exécuté par un matériel équipé d'un système d'exploitation, un process comporte au moins :
- une couche logicielle librairie permettant à ce système d'exploitation d'accéder aux programmes d'activation des protocoles de communications associés aux entrées sorties ;
- une couche intermédiaire comportant un service de communication entre process associée à un canal de communication ;
- un multiplexeur encapsulé dans la librairie multiplexant le canal de communication d'un process Pi avec les canaux de communication des autres process P1, P2, ...PN, le canal de communication (21) entre deux process Pi, Pk, étant activé par les multiplexeurs des deux process, sur requête de l'un.

L'invention a pour principaux avantages qu'elle permet d'obtenir des services de haut niveau parallèlement au service de communication inter-process, qu'elle permet une simplification des applications et qu'elle est simple à mettre en oeuvre.

D'autres caractéristiques et avantages apparaîtront à l'aide de la description qui suit faite en regard de dessins annexés qui représentent:
- la figure 1, une représentation de couches logicielles implémentées sur un matériel pour l'exécution d'un process ;
- la figure 2, deux process coopérant dans le cadre d'un système client serveur ;
- la figure 3, une représentation de couches logicielle pour l'exécution d'un process intégré dans un système selon l'invention ;
- la figure 4, une illustration de l'interfaçage des process dans un système selon l'invention

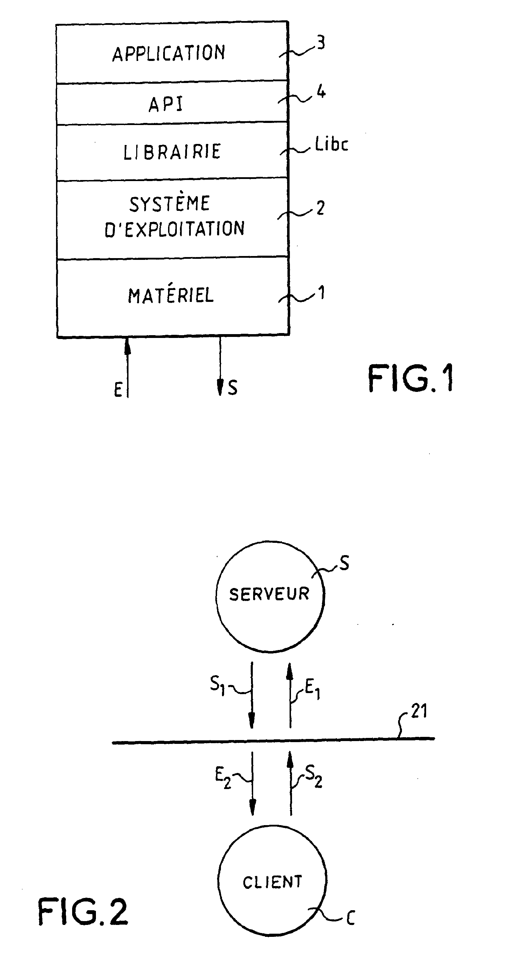

La figure 1 illustre une représentation des couches logicielles implémentées sur un matériel 1 pour l'exécution d'un traitement informatique, appelé encore process par la suite, dans un système de type Unix. Le système d'exploitation ou noyau temps réel constitue une première couche logicielle 2 qui communique directement avec le matériel 1. La couche supérieure 3 est constituée de l'applicatif. Pour faire appel à des services UBSS, par exemple du type distribution de données ou autres, l'applicatif 3 doit faire appel à une autre couche logicielle 4, communément appelée API, qui est une interface de programmation spécifique permettant aux données traitées par le process d'accéder aux entrées/sorties physiques E, S, et donc d'être échangées avec d'autres process. Une couche logicielle libc comporte une librairie qui permet notamment au système d'exploitation 2 d'accéder aux fichiers et aux primitives de communication, destinés notamment à l'activation des protocoles de communications associés aux différentes entrées/sorties E, S interfacées au matériel 1. L'applicatif 3 est obligé de passer par la couche API 4 pour accéder à la librairie libc. Une couche logicielle intermédiaire non représentée, appelée « middleware » dans la littérature anglo-saxonne, comporte les services UBSS du type par exemple distribution de données, gestion du temps, ou supervision. Cette couche intermédiaire est placée entre le système d'exploitation 2 et l'applicatif 3. L'applicatif 3 et l'API 4 sont deux couches logicielles qui appartiennent à l'espace utilisateur.

La figure 2 illustre deux process qui coopèrent dans le cadre par exemple d'un système client serveur. Ces process utilisent une architecture logicielle du type de celle de la figure 1. Un premier process S, par exemple le serveur, échange des données avec un canal de communication ou pipe 21. Un deuxième process C, par exemple le client, échange des données avec ce même pipe 21. Le pipe 21 est en fait un port de communication associé à un service qui assure le transfert de données unidirectionnel et sécurisé entre les deux process. La couche intermédiaire précitée comporte par exemple ce service. En jouant sur la direction des entrées/sorties de chacun des process, en re-dirigeant ces entrées/sorties, il est possible de faire coopérer ces deux process indépendamment l'un de l'autre, la sortie S₁ du serveur étant dirigée sur l'entrée E₂ du client, la sortie S₂ de ce dernier étant dirigée sur l'entrée E₁ du serveur.

Le mode « coprocess» tel qu'illustré par la figure 2 présente des limitations. En particulier le canal de communication 21 ne permet de connecter que deux process à la fois à cause notamment de la connexion point à point des entrées et sorties E₁, E₂, S₁, S₂, une API étant associée à chacune des ces entrées/sorties. Par ailleurs, les deux process doivent utiliser la même machine, et en particulier le même matériel 1 et le même système d'exploitation 2. Pour surmonter ces limitations, l'invention permet à un applicatif d'accéder au système d'exploitation sans avoir besoin d'utiliser une API, et donc de connexion point à point des entrées/sorties. A cet effet, l'invention utilise un programme de multiplexage des canaux de communication ou pipes 21 entre process.

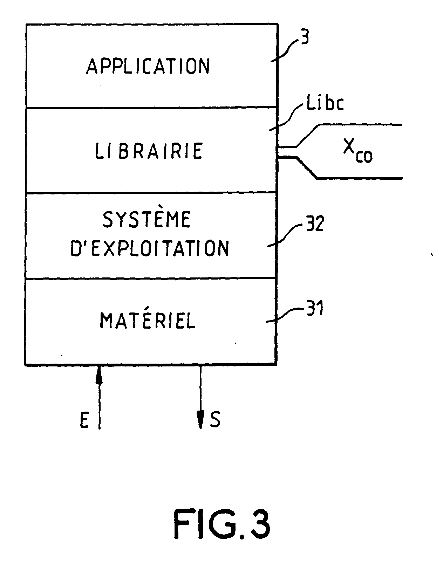

La figure 3 illustre un empilement des couches pour l'exécution d'un process Pi fonctionnant dans un système selon l'invention. Ce process est exécuté par un matériel 31 équipé d'un système d'exploitation 32. La librairie libc, qui permet au système d'exploitation d'accéder aux programmes d'activation des protocoles de communication des entrées/sorties, est toujours intercalée entre la couche logicielle d'application ou applicatif 3 et le système d'exploitation. Une couche intermédiaire comporte le service de communication associé à un pipe 21. Un multiplexeur X_{co} est encapsulé dans la librairie libc, il multiplexe le canal de communication du process Pi avec les canaux de communication des autres process P1, P2, ...PN. Plus particulièrement, le pipe 21 entre deux process Pi, Pk, est activé par les multiplexeurs des deux process, sur requête de l'un. Pour illustrer cette fonction, le programme de multiplexage sera encore appelé par la suite multiplexeur à coprocess. Un multiplexeur à coprocess est encapsulé dans la librairie libc de chaque process. Ce multiplexeur permet notamment à un process de communiquer simultanément avec plusieurs process en utilisant les entrées/sorties standards ou ports de communication E, S, du matériel 31 de chaque process. Il convertit les échanges de données de type fichier en échange de données de type réseau, sous forme de flots de données, en utilisant par exemple le protocole IP Multicast, qui autorise notamment la diffusion simultanée de données et plusieurs process lecteurs par machine. Par ailleurs le multiplexeur utilise par exemple des mécanismes d'acquittement des données afin de préserver le caractère sécurisé des canaux de communication. La concurrence d'accès à un process en lecture et en écriture est assurée par son multiplexeur X_{co} qui peut allouer des ports de communication séparés au niveau réseau. Par ailleurs, sur un même canal, le multiplexeur peut discriminer plusieurs flots de données si ceux-ci ont été définis au préalable.

Pour un process donné, la transparence du multiplexeur X_{co} par rapport à l'application 3 est notamment assurée par l'absence d'une interface de programmation spécifique API. Les services du multiplexeur, notamment le service de communication inter process, sont mis en oeuvre par interception des appels relatifs aux entrées et sorties selon le protocole IP Multicast. La librairie Libc qui est l'interface entre le niveau applicatif 3 et le niveau système 32 voit un certain nombre de ses fonctions surchargées par celles du multiplexeur X_{co}. Néanmoins, à l'aide de techniques de librairie partagée et d'édition de lien dynamique, l'ajout du multiplexeur X_{co} se fait sans modification des fichiers binaires, et donc des codes sources. La définition des interfaces de la librairie libc étant standardisée, selon par exemple les standards POSIX et ANSI-ISO, la portabilité de cette technique d'utilisation d'un multiplexeur est garantie. Ce multiplexeur X_{co} implémenté au niveau de la librairie libc permet d'augmenter les capacités du système d'exploitation 32 de manière non intrusive, c'est-à-dire sans modification du noyau. L'infrastructure du réseau nécessaire, par exemple du type IP Multicast, étant elle aussi standardisée et généralisée, il est possible de bâtir un système distribué hétérogène.

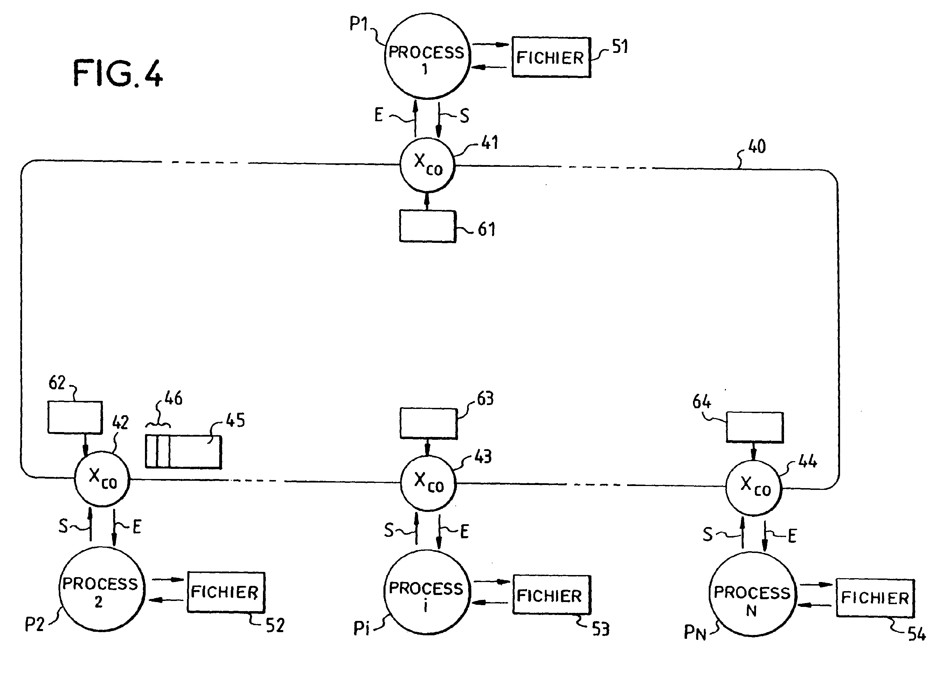

La figure 4 illustre l'interfaçage des process dans un système selon l'invention. Ce système comporte n process P1, P2, ...Pi, ...PN implémentés sur une ou plusieurs machines. Tous ces process peuvent être implémentés chacun sur une machine différente. Ces process communiquent entre eux par un réseau 40. Les échanges de données se font par un protocole du type d'échange de flots de données, par exemple selon le protocole IP Multicast. Chaque process est considéré vis-à-vis des autres comme fournisseur de services et/ou utilisateur de services. A chaque process est donc par exemple associée une classe de services, dans une version donnée. Parmi ces services, il y a notamment les services de communication inter process correspondant aux pipes 21, ces services assurant le transfert de données unidirectionnel et sécurisé entre deux process. A chaque service est associé un protocole composé de requêtes et de réponses, correspondant aux entrées E et sorties S du process. Ce protocole est défini au niveau du multiplexeur à coprocess 41, 42, 43, 44, dans une table 61, 62, 63, 64 indiquant le type de données, requête ou réponse notamment, le service associé et le service prérequis ainsi que des attributs de dimensionnement pour le traitement des données tels que par exemple la taille des blocs de données, la fréquence, le temps de traitement. Les données traitées par chaque process sont stockées dans un fichier. Chaque process est donc associé à au moins un fichier de données 51, 52, 53, 54. Un fichier peut être ou non implémenté sur la même machine que le process.

Pour échanger un bloc de données par exemple entre le process Pi et le process P2, le process Pi émet via son multiplexeur X_{co} une requête. Plus particulièrement, le process Pi lit les données dans le fichier 53 puis il émet sur le réseau 40 un bloc de données comportant un en-tête 46 et les données extraites du fichier 53. Pour faire transiter les données, en entrée ou en sortie, sur un ou plusieurs ports de communication du process, le multiplexeur X_{co} utilise le service de la librairie libc pour commander au système d'exploitation d'activer les protocoles de communication de ces ports. L'en-tête comporte notamment l'adresse du process destinataire, en l'occurrence P2, le type de données (requête ou réponse), ainsi que le type de service associé avec les caractéristiques correspondant. Dans le cas d'un échange de données, ce service est le service de communication inter process d'un pipe. Pour chaque process, le multiplexeur à coprocess embarqué dans la libraire libc intercepte les appels faits au système d'exploitation 32. Les multiplexeurs 41, 42, 43 filtrent la requête. En particulier, ils interprètent à l'aide de leur table le type de données et la nature du service demandé. Le multiplexeur 42 du process destinataire P2 comprend qu'il s'agit d'un échange de données dont il est destinataire. Le process P2 lit par exemple les données 45 puis les écrit par exemple dans son fichier associé 52. Un flot de données 45, 46 est ainsi traité comme un protocole, par requêtes et réponses. Un système selon l'invention peut ainsi traiter plusieurs flux de données en parallèle.

Outre la fonction de communication inter process par multiplexage des canaux de transmission, qui permet déjà d'obtenir une machine parallèle virtuelle de manière non intrusive, d'autres services de haut niveau peuvent être obtenus. En particulier, plusieurs modes de fonctionnement parallèles des services peuvent être implémentés.

Un service peut être la redondance maître-esclave. La première instance du service, c'est-à-dire le premier process de la classe considérée, est maître et les instances suivantes sont esclaves. Lorsqu'un process Pi émet sur le réseau 40 une requête, celle-ci est traitée par tous les autres process P1, P2, ...PN, mais le multiplexeur 41, 42, 43, 44 de chacun de ces process filtre les réponses des esclaves, c'est-à-dire qu'il ne communique pas ces réponses aux process, ce service étant transparent pour ces derniers. En cas de perte du maître, un esclave est promu maître à son tour. Cet algorithme de reconfiguration à chaud permet notamment de mettre en oeuvre une stratégie efficace de tolérance aux pannes. Pour un mode d'accès aux process en concurrence sélective, un système selon l'invention peut permettre de répartir la charge de traitement entre plusieurs instances d'un process. A cet effet, le multiplexeur à coprocess sélectionne à chaque requête quelle instance effectue le traitement, en se basant par exemple sur le numéro de séquence de la requête modulo le nombre de concurrents. Pour une concurrence non sélective, deux instances au moins d'un process effectuent les mêmes requêtes. Leurs réponses sont alors retournées au process client qui décide de la validité des réponses. Ce type de système permet de connecter deux serveurs ou plus avec une interface identique mais dont l'implémentation est différente, afin notamment de pallier les pannes logicielles.

Plusieurs aspects de reconfiguration dynamique du système sont couverts par les multiplexeurs à coprocess. Pour une reconfiguration fonctionnelle globale, de nouvelles fonctions, définies par de nouvelles classes de service, peuvent être ajoutées au système par le lancement de nouveaux process sans nécessiter un arrêt du système. Dans le cas d'une reconfiguration fonctionnelles locale, pour une classe de service donnée, plusieurs process dans une version différente peuvent cohabiter sans risques, la version du service requis étant précisée dans la table 61, 62, 63, 64 des requêtes sortantes de chaque process. Dans le cas d'une adaptation dynamique à la charge de traitement, pour une classe de service donnée, dans une version donnée, un multiplexeur à coprocess peut déclencher le démarrage d'un nouveau process en mode de concurrence sélective lorsque le seuil maximum de fréquence de requête est franchi. Une reconfiguration matérielle peut être obtenue en mettant en oeuvre les techniques de création de points de reprise, appelée encore « checkpointing ». Dans ce cas, un process peut avoir redémarré sur une autre machine sans interruption du service, autre que le temps de latence dû au redémarrage du process.

Un service que permet encore le multiplexeur à coprocess est la supervision. Les systèmes de supervision sont en général composés d'un agent de collecte d'information, présent dans les différents composants du système à superviser, et d'un programme centralisé, traitant les données capturées par les agents. Le multiplexeur à coprocess peut collecter des données de supervision aux deux frontières auxquelles il est confronté, c'est-à-dire l'interface avec le process P1, P2, ...PN et l'interface avec le média de transport. Pour l'interface avec le process, il collecte notamment les données relatives à la taille des requêtes ou réponses, à la fréquence et au temps de traitement par le process. Pour l'interface avec le média, il collecte notamment les données relatives au temps de latence, c'est-à-dire au délai de réception de l'acquittement, et à la qualité de transmission, notamment en ce qui concerne le nombre de retransmissions. Pour toutes ces données, le process enregistre le nombre de mesures, les valeurs minimales, maximales et moyennes. Pour chacune de ces valeurs, il est possible de configurer des seuils dont le dépassement peut être utilisé pour le déclenchement d'une alarme ou une autre action. Le multiplexeur à coprocess dédie un canal de communication pour l'échange de données de supervisions entre process.

Le multiplexeur à coprocess peut encore permettre l'enregistrement et le rejeu des flots de données. L'enregistrement et le rejeu ne sont pas directement implémentés dans le multiplexeur à coprocess mais s'appuient sur certaines de ses propriétés. L'ensemble des flots de données étant diffusé sur le réseau IP Multicast 40, un process enregistreur Pe peut être inséré sans impact pour la bande passante, capturant les messages dans les fichiers tout en préservant les informations de localisation spatiale, c'est-à-dire notamment l'origine et la destination des messages, et temporelles, notamment la datation des messages. La capture continue des flots de données entre process Pi, Pk n'est pas suffisante pour permettre le rejeu du système sur une plage temporelle donnée. Il faut en plus savoir remplacer chacun des process dans l'état correct avant le rejeu des premiers messages. La solution peut donc être de compléter le mécanisme de capture continue des transactions par un mécanisme de capture périodique des états des process. La capture d'état des process est par exemple implémentée par une fonction de « checkpoint » qui consiste ici d'une part à capturer dans un fichier l'image de la mémoire virtuelle du process, par exemple par un mécanisme similaire de vidage de la mémoire encore appelé « core dump », et d'autre part à pouvoir restaurer le process à partir du fichier de capture. La fonction de « checkpoint » est implémentée de manière transparente dans le process, par surcharge de la librairie standard, comme l'est le multiplexeur à coprocess dans la libraire libc. Lors du rejeu d'un process, le système repart du « checkpoint » antérieur à la date de démarrage du rejeu, puis complète en rejouant les transactions du process tout en bloquant les sorties, jusqu'à la date de démarrage. Ensuite les transactions sont rejouées normalement sur la durée du rejeu.

Un autre service possible est la modélisation et la validation des protocoles. En fournissant une description locale des entrées et sorties au niveau du multiplexeur à coprocess X_{co} embarqué dans chaque process, accompagnée de certains attributs comme par exemple les requêtes prérequises ou les caractères de dimensionnement tels que par exemple la taille ou le temps de traitement, il devient possible d'en dériver au niveau système un modèle global formel sur lequel peuvent être effectuées des vérifications de compatibilité, absence de possibilité d'inter blocage entre process, ou de dimensionnement des ressources. Il est possible pour cela d'utiliser par exemple un outil tel que celui connu sous le nom de SPIN qui permet d'effectuer des simulations aléatoires ou bien une vérification exhaustive des propriétés de cohérence logique du système. Cet outil se base notamment sur le langage PROMELA (Process Meta Language) qui est un langage permettant d'obtenir une modélisation abstraite de systèmes distribués asynchrones, sous forme d'automates à états non finis, et une algèbre dite LTL, selon l'expression « Logique Temporelle Linéaire », qui permet de modéliser les propriétés, requises ou non désirées, du système, par exemple la perte aléatoire d'un datagramme IP Multicast. L'utilisation de la représentation locale des protocoles dans les multiplexeurs à coprocess X_{co} permet alors de s'affranchir de la tâche délicate de programmation du modèle formel et de maintenir automatiquement une représentation abstraite du système pendant tout son cycle de vie, de manière notamment à pouvoir simuler et valider les protocoles implémentés par les process unitaire P1, P2, ...PN, avant même d'avoir à les implémenter. Au strict minimum, il est possible sur le système en ligne, par un tri topologique sur le graphe de dépendance des requêtes de détecter les inter blocages potentiels entre process, et donc de les prévenir.

L'invention permet avantageusement une simplification des applications. En effet, les fonctions liées à la communication inter-process, à la concurrence ou à la validation des protocoles, sont par essence distribuées. Il est donc normal des les voir implémentés, puis activées indépendamment des applications unitaires P1, P2, ...PN. Il en résulte donc une simplification importante de la conception des applications qui peuvent se focaliser sur la réalisation d'une tâche unique ou élémentaire, ces tâches s'interfaçant sur les entrées et sorties standards. Un effort particulier est requis sur la description des entrées/sorties dans le multiplexeur à coprocess. Cet effort est de toute façon bénéfique, puisqu'il formalise l'interface, ce qui facilite la réutilisation d'un module relatif à une tâche élémentaire. Un module ayant un traitement de type batch, c'est-à-dire une lecture de ses données en entrée depuis un fichier 51, 52, 53, 54, passe automatiquement à un mode réactif par l'action du multiplexeur à coprocess. La nécessité d'introduire de l'asynchronisme au niveau de l'application disparaît, notamment du fait de la distribution des services dans des process concurrents et de l'asynchronisme déjà présent dans un multiplexeur à coprocess.

Un autre avantage apporté par l'invention a trait à la stratégie de réutilisation. En développement orienté objet classique, la réutilisation de code est obtenue par abstraction des algorithmes puis par instanciation en objets. Cette méthodologie de développement implique une nouvelle conception complète du code préexistant. Ce modèle peut devenir inefficace lorsque l'algorithme se trouve dispersée dans une hiérarchie complexe de classes et sous-classes, rendant difficile la compréhension d'une classe sans connaître les détails de l'ensemble de la hiérarchie. Au contraire, le multiplexeur à coprocess, et plus généralement l'ajout de services de manière transparente aux interfaces système, favorise une réutilisation par concrétisation des algorithmes et capacité d'intégration d'un process dans le système. Ce n'est pas tant le code qui est réutilisé que directement l'exécutable. Il n'est a priori pas nécessaire de revenir sur le code existant, ou alors pour le simplifier, mais pas pour le concevoir. L'héritage de services a lieu non pas de manière statique à la compilation des programmes, mais de manière dynamique à l'exécution des programmes. L'interface entre modules est définie en termes de protocoles, plutôt qu'en termes de structures de données et méthodes. La programmation orientée objet a notamment pour but de maîtriser la complexité au sein d'une application, c'est-à-dire de créer de grosses applications à partir de petits ensembles de services, alors que le multiplexeur à coprocess tel qu'utilisé dans l'invention permet de maîtriser la complexité d'un système distribué, c'est-à-dire de créer de gros systèmes concurrents à partir de petits process.

De manière générale, les protocoles du type flots de données ou flots de texte, traités ligne par ligne, sont faciles à appréhender. Ils permettent une définition simple et lisible des commandes, ce qui autorise la mise en oeuvre directe du programme isolé en mode interactif sur un terminal. Un utilisateur bénéficie d'une batterie étendue d'outils puissants de manipulation de texte pour automatiser les tests ou la simulation de données. Au niveau système, les avantages sont encore plus marqués. En particulier, le format texte permet une interprétation immédiate de la capture des flots de données entre process Pi, Pk. La représentation en code ASCII des données permet de garantir l'échange de données entre plates-formes d'architectures matérielles hétérogènes. L'utilisation d'un protocole en mode texte évite aussi d'avoir à encombrer le code avec les traces de mise au point liées aux échanges. Enfin, dans le temps, le mode texte, par son ouverture et sa flexibilité, permet de faciliter la compatibilité ascendante entre les versions successives d'un protocole.

## Revendications

1. Système informatique comportant au moins deux process (P1, P2, ...Pi, ...PN) reliés par un réseau (40), **caractérisé en ce que** chaque process étant exécuté par un matériel (31) équipé d'un système d'exploitation (32), un process comporte au moins :
- une couche logicielle librairie (libc) permettant à ce système d'exploitation (32) d'accéder aux programmes d'activation des protocoles de communications associés aux entrées sorties ;
- une couche intermédiaire comportant un service de communication entre process associée à un canal de communication (21) ;
- un multiplexeur (X_{co}, 41, 42, 43, 44) encapsulé dans la librairie (libc) multiplexant le canal de communication d'un process Pi avec les canaux de communication des autres process P1, P2, ...PN, les échanges étant effectués sous forme de flots de données, le canal de communication (21) entre deux process Pi, Pk, étant activé par les multiplexeurs des deux process, sur requête de l'un.

2. Système selon la revendication 1, **caractérisé en ce que** la librairie (libc) est intercalée entre une couche logicielle d'application (3) et le système d'exploitation (32).

3. Système selon l'une quelconque des revendications précédentes, **caractérisé en ce que** le canal de transmission (21) assure le transfert de données unidirectionnel entre deux process.

4. Système selon l'une quelconque des revendications précédentes, **caractérisé en ce que** le service de communication entre process est activé par le multiplexeur (X_{co}, 41, 42, 43, 44) par interception d'appels relatifs aux entrées/sorties selon un protocole composé de requêtes et de réponses, ce protocole étant défini au niveau du multiplexeur dans une table (61, 62, 63, 64) indiquant le type de données, les échanges se faisant sous forme de flots de données.

5. Système selon la revendication 4, **caractérisé en ce qu'**en plus du service de communication entre process, d'autres services activés par le multiplexeur sont associés au process, les services étant activés selon un protocole composé de requêtes et de réponses.

6. Système selon l'une quelconque des revendications 4 ou 5, **caractérisé en ce que** la table (61, 62, 63, 64) indique le type de données, requête ou réponse, le service associé ainsi que des attributs de dimensionnement pour le traitement des données.

7. Système selon l'une quelconque des revendications 5 ou 6, **caractérisé en ce qu'**un service étant la redondance maître-esclave, la première instance du service étant maître et les instances suivantes étant esclaves, lorsqu'un process Pi émet une requête, celle-ci est traitées par tous les autres process P1, P2, ...PN, le multiplexeur de ces process filtrant les réponses des esclaves, en cas de perte d'un maître, un esclave étant promu maître à son tour.

8. Système selon l'une quelconque des revendications 5 à 7, **caractérisé en ce que** dans un mode d'accès à un process en concurrence sélective, pour permettre de répartir la charge de traitement entre plusieurs instances du process, le multiplexeur (X_{co}) de ce dernier sélectionne à chaque requête quelle instance effectue le traitement.

9. Système selon l'une quelconque des revendications 5 à 8, **caractérisé en ce que** dans un mode d'accès à un process en concurrence non sélective, deux instances au moins d'un process effectuent les mêmes requêtes, leurs réponses étant retournées au process client qui décide de la validité des réponses.

10. Système selon l'une quelconque des revendications 5 à 9, **caractérisé en ce qu'**un multiplexeur (41, 42, 43, 44) collecte des données de supervision aux deux frontières auxquelles il est confronté, l'interface avec le process P1, P2, ...PN et l'interface avec le média de transport, pour toutes ces données, le process enregistrant le nombre de mesures, les valeurs minimales, maximales et moyennes, pour chacune de ces valeurs, des seuils étant configurés, le dépassement ce ces seuils étant utilisé pour le déclenchement d'une alarme ou une autre action.

11. Système selon la revendication 10, **caractérisé en ce que** pour l'interface avec le process, le multiplexeur collecte les données relatives à la taille des requêtes ou réponses, à la fréquence et au temps de traitement par le process, pour l'interface avec le média, il collecte les données relatives au temps de latence et à la qualité de transmission.
